# EUROPEAN PATENT APPLICATION

(11) **EP 2 654 229 A1**
(43) Date of publication of application: **23.10.2013**
(21) Application number: 10860862.1
(22) Date of filing: 16.12.2010
(51) Int. Cl.: H04L 1/16, H04L 13/08, H04W 28/04, H04W 80/02

(54) **WIRELESS COMMUNICATION DEVICE AND WIRELESS COMMUNICATION DEVICE CONTROL METHOD**

(71) Applicant: Fujitsu Limited, Kawasaki-shi, Kanagawa 211-8588 (JP)
(72) Inventor: MATSUOKA, Hideki, Kawasaki-shi Kanagawa 211-8588 (JP); KAJITANI, Mitsuhiro, Kato-shi Hyogo 673-1447 (JP)
(74) Representative: Schultes, Stephan
(86) International application number: PCT/JP2010/072708
(87) International publication number: WO 2012/081117

(57) **Abstract**

A PDU data managing unit(12) obtains PDU segments contained in received MAC-ehs PDU data, generates an expansion table containing LCH-IDs, TSNs, SIs, and storing destination addresses of the PDU segments, and stores the MAC-ehs PDU data into a storage unit. A re-transmission controlling unit(13) determines that an expected PDU segment is a PDU segment including a sequence number immediately following the last one of sequence numbers of consecutive PDU segments that have been received. If the sequence number of a received PDU segment does not coincide with the sequence number of the expected PDU segment, the re-transmission controlling unit makes a re-transmission request for the expected PDU segment and subsequently issues a notification when a predetermined condition is satisfied. When having received the notification issued by the re-transmission controlling unit, a pre-deciphering processing unit obtains the PDU segments from the storage unit based on the addresses written in the expansion table and completes a MAC-ehs SDU from the obtained PDU segments based on the expansion table.

## Description

### [Technical Field]

The present invention relates to a wireless communication apparatus and a wireless communication apparatus controlling method.

### [Background Art]

A Wideband Code Division Multiple Access (W-CDMA) system defined by the 3rd Generation Partnership Project (3GPP) standard includes a Radio Resource Control (RRC) layer and a Radio Link Control (RLC) layer. Further, the W-CDMA system also includes a Medium Access Control (MAC) layer and a physical layer. The W-CDMA system thus uses a plurality of protocol layers.

In recent years, high-speed transfer systems such as High Speed Downlink Packet Access (HSDPA) have been developed for communication systems implementing a W-CDMA method as described above. To realize an HSDPA transfer method, a re-transmission function including a Reordering process to re-arrange pieces of data has been introduced to the MAC layer. In addition, to further improve data processing efficiency, a MAC-ehs processing unit (which may be referred to as a "MAC-ehs entity") that supports a reassembly process is also introduced. The MAC-ehs processing unit uses MAC-ehs Protocol Data Units (PDUs) as units of processing. In the following sections, a piece of data having the size of a MAC-ehs PDU may be simply referred to as a "MAC-ehs PDU".

A conventional MAC-ehs processing unit includes five processing unit, namely, a Disassembly entity, a Reordering queue distribution, a Reordering entity, a Reassembly entity, and an LCH-ID/Demux entity.

The Disassembly entity disassembles a MAC-ehs PDU and obtains Reordering PDUs. The Reordering queue distribution sends the Reordering PDUs to proper channels by using the Logical Channel IDentifications (LCH-IDs). The Reordering entity is provided for each of logical channels that are bound in correspondence with MAC-ehs queues and exercises re-transmission control by, for example, waiting for Reordering PDUs that have not yet arrived until a series of pieces data is completely obtained. The waiting state will be referred to as a "Reorderig state". By referring to Segmentation Indication (SI) fields, the Reassembly entity generates complete MAC-ehs Service Data Units (MAC-ehs SDUs) by concatenating and discarding the MAC-ehs SDUs contained in the Reordering PDUs. Further, the Reassembly entity converts the completed MAC-ehs SDUs to MAC-d or MAC-c SDUs that correspond thereto. The LCH-ID/Demux entity transmits an RLC-PDU obtained by performing a certain padding process on the inside of the MAC-d or MAC-c SDUs, to proper logical channels by referring to LCH-ID fields. After that, the RLC-PDU generated by the MAC-ehs processing unit is encrypted by another processing unit.

When performing these processes, the Reordering entity, the Reassembly entity, and the LCH-ID/Demux entity store the data into a memory when each of the processes is completed. In that situation, each of the entities performs a Direct Memory Access (DMA) transfer to the memory configured with, for example, a Synchronous Dynamic Random Access Memory (SD-RAM). For this reason, because the data is transferred a large number of times between a buffer serving as a storage unit for reading the data and the memory, the processing takes a long time.

Further, according to the 3GPP specifications, while in the Reordering state, the Reordering PDUs contained in the MAC-ehs PDU that is currently in a Reordering time period are accumulated in the buffer, and no process is performed by the Reassembly entity and the LCH-ID/Demux entity. In other words, the processes performed by the Reassembly entity and the LCH-ID/Demux entity are not executed until a transition occurs from the Reordering state to a Non-Reordering state. In addition, because the processes performed by the Reassembly entity and the LCH-ID/Demux entity are executed after the Non-Reordering state is achieved, it further takes as much time as requested by the execution of the processes after the waiting time period has elapsed. As a result, an overhead occurs in the MAC-ehs processing unit, and the latency period also increases. Thus, there is a possibility that the throughput of the MAC-ehs processing unit may be degraded.

As a conventional technique related to MAC-ehs entities, a technique has been proposed by which, after a processing unit that performs the reassembly process has reassembled Reordering PDUs together and has transferred the reassembled result to a superordinate layer, all of the PDU segments remaining in the processing unit are discarded in order to improve the resetting of the MAC-ehs entity. Further, another technique has also been presented by which, for the purpose of improving the throughput of an HSDPA, the functions of a MAC-hs buffer and an RLC buffer are realized by one shared memory so as to simplify the processing.

### [Citation List]

### [Patent Citation]

Patent Literature 1: Japanese Laid-open Patent Publication No. 2008-278496
Patent Literature 2: Japanese Laid-open Patent Publication No. 2006-020044

### [Non Patent Citation]

Non Patent Literature 1: 3GPP TS25.321 3rd Generation Partnership Project; Technical Specification Group Radio Access Network; Medium Access Control (MAC) protocol specification (Release 8)
Non Patent Literature 2: 3GPP TS25.331 3rd Gneration Partnership Project; Technical Specification Group Radio Access Network; Radio Resource Control (RRC); Protocol specification (Release 8)

### [Summary of Invention]

### [Technical Problem]

However, according to the conventional technique by which the remaining PDU segments are discarded after the Reordering PDUs have been transferred to the superordinate layer, the processing units need to wait until the Reordering state ends. Further, it is difficult to reduce the number of times a DMA transfer is activated. Furthermore, it is difficult to apply the technical features of a MAC-hs buffer to the processes performed on the MAC-ehs PDUs. According to the conventional technique by which the functions of the MAC-hs buffer and the RLC buffer are realized by the one memory, because the stand-by of the processing units during the Reordering state and the reduction of the number of times a DMA transfer is activated are not taken into consideration, it is difficult to realize an enhanced throughput of the processes performed on the MAC-ehs PDUs.

In view of the circumstances described above, an object of the techniques disclosed herein is to provide a wireless communication apparatus and a wireless communication apparatus controlling method that are able to improve the throughput of the processes performed on the MAC-ehs PDUs.

### [Solution to Problem]

To solve the above problem and attain the object, according to an aspect, a wireless communication apparatus and a wireless communication apparatus controlling method disclosed in the application include a data input unit that receives MAC-ehs PDU data having therein PDU segments and a header including logical channel identifiers that indicate logical channels through which the PDU segments are to be transmitted, sequence numbers of the PDU segments, and SI information that indicates connection relationships among SDU segments contained in the PDU segments. A PDU data managing unit determines addresses in a storage unit at which the MAC-ehs PDU data is to be stored, based on the header of the received MAC-ehs PDU data, generates an expansion table containing the logical channel identifiers, the sequence numbers, and the SI information of the PDU segments as well as the determined addresses in the storage unit, and stores the MAC-ehs PDU data at the determined addresses in the storage unit. A re-transmission controlling unit determines that an expected PDU segment is a PDU segment having a sequence number immediately following a last one of sequence numbers of consecutive PDU segments that have already been received by the PDU data managing unit, judges whether a sequence number of a received PDU segment coincides with the sequence number of the expected PDU segment, makes a re-transmission request for the expected PDU segment if the sequence numbers do not coincide, and issues a notification indicating that a predetermined time length has elapsed since the re-transmission request is made or PDU segments accumulated in the storage unit have reached a predetermined size. A pre-deciphering processing unit, when having received the notification issued by the re-transmission controlling unit, obtains the PDU segments from the storage unit based on the addresses written in the expansion table and completes a MAC-ehs SDU from the obtained PDU segments based on the expansion table.

### [Advantageous Effects of Invention]

According to an aspect of the wireless communication apparatus and the wireless communication apparatus controlling method disclosed herein, it is possible to achieve advantageous effects where the throughput of the processes performed on the MAC-ehs PDUs is improved by reducing the number of times the wireless data is transferred by DMA and by reducing the waiting time periods in the Reordering state.

### [Brief Description of Drawings]

FIG. 1 is a block diagram of a MAC-ehs entity according to an exemplary embodiment.
FIG. 2 is a diagram of a format of a MAC-ehs PDU.
FIG. 3 is a drawing of an example of an expansion table.
FIG. 4-1 is a drawing for explaining storing of Reordering PDUs into an SD-RAM during a Reordering time period.
FIG. 4-2 is a drawing for explaining storing of Reordering PDUs into an SD-RAM during a non-Reordering time period.
FIG. 5 is a drawing of an example of a conversion process table.
FIG. 6 is a drawing for explaining an SDU table generating process performed when the SI of TSN1 is conjectured to be "00".
FIG. 7 is a drawing for explaining a process performed in a situation where, while TSN0 of which the SI is "10" and TSN2 of which the SI is "00" have already been received, TSN1 of which the SI is "01" is further received.
FIG. 8 is a flowchart of a deciphering process performed by a wireless communication apparatus according to the embodiment.
FIG. 9 is a flowchart of a conversion process table generating procedure and a conversion process.
FIG. 10 is a flowchart of a conversion process into a MAC-c or MAC-d SDU, based on a judgment whether an assembly is possible for each Reordering SDU.
FIG. 11 is a drawing of an exemplary hardware configuration of a wireless communication apparatus according to an embodiment.

### [Embodiments for Carrying Out the Invention]

Exemplary embodiments of a wireless communication apparatus and a wireless communication apparatus controlling method disclosed herein will be explained in detail below, with reference to the accompanying drawings. The techniques disclosed herein are not limited to the exemplary embodiments described below.

### <Exemplary Embodiments>

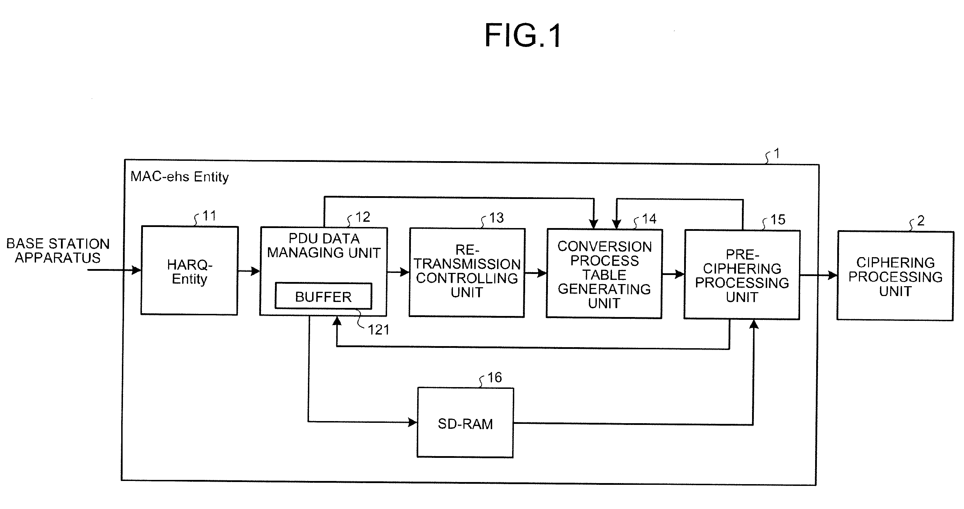

FIG. 1 is a block diagram of a MAC-ehs entity according to an exemplary embodiment. As depicted in FIG. 1, a MAC-ehs entity 1 according to the embodiment includes a Hybrid Automatic Repeat-reQuest (HARQ) entity 11, a PDU data managing unit 12, a re-transmission controlling unit 13, a conversion process table generating unit 14, a pre-deciphering processing unit 15, and an SD-RAM 16. The SD-RAM 16 serves as an example of the "storage unit". Further, provided in a subsequent stage of the MAC-ehs entity 1 is a deciphering processing unit 2, which is included in a subsequent entity.

The HARQ entity 11 is a processing unit that controls a HARQ protocol. The HARQ entity 11 obtains data transmitted from a base station apparatus. The transmitted data is a MAC-ehs PDU. Further, for example, the HARQ entity 11 transmits a HARQ acknowledgment signal such as an ACK (ACKnowledgment) or a NACK (Negative ACKnowledgment) to the base station apparatus. After that, the HARQ entity 11 outputs the received data to the PDU data managing unit 12. The HARQ entity 11 corresponds to an example of the "data input unit".

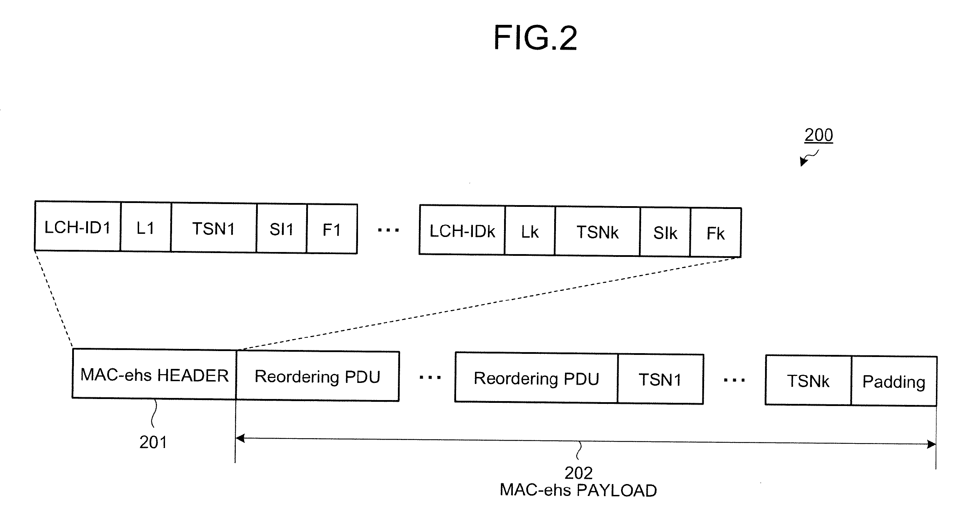

FIG. 2 is a diagram of a format of a MAC-ehs PDU. Next, a structure of a MAC-ehs PDU 200 will be explained, with reference to FIG. 2. The MAC-ehs PDU 200 includes a MAC-ehs header 201 and a MAC-ehs payload 202.

The MAC-ehs header 201 includes LCH-IDs, Length (L) fields, Transmission Sequence Number (TSN) fields, SI fields, and Flag (F) fields. Each of the LCH-IDs provides an identifier of a logical channel on the reception side and information about a Reordering buffer serving as the destination of a corresponding Reordering SDU. Each of the TSN fields provides the sequence number of a corresponding Reordering PDU. Each of the SI fields indicates whether the MAC-ehs SDUs contained in a corresponding MAC-ehs PDU are segmented or not. Each of the L fields indicates the length of a corresponding Reordering SDU. Each of the F fields in the MAC-ehs header 201 depicted in FIG. 2 indicates whether there is a subsequent field. If an F field is set to "1", it means that the MAC-ehs header ends in the subsequent bit and Reordering PDU data starts. A TSN field and an SI field are provided for each of the Reordering PDUs. An LCH-ID and an L field are provided for each of the Reordering SDUs.

The MAC-ehs payload 202 contains one or more Reordering PDUs. Further, although not illustrated, each of the Reordering PDUs contains one or more Reordering SDUs.

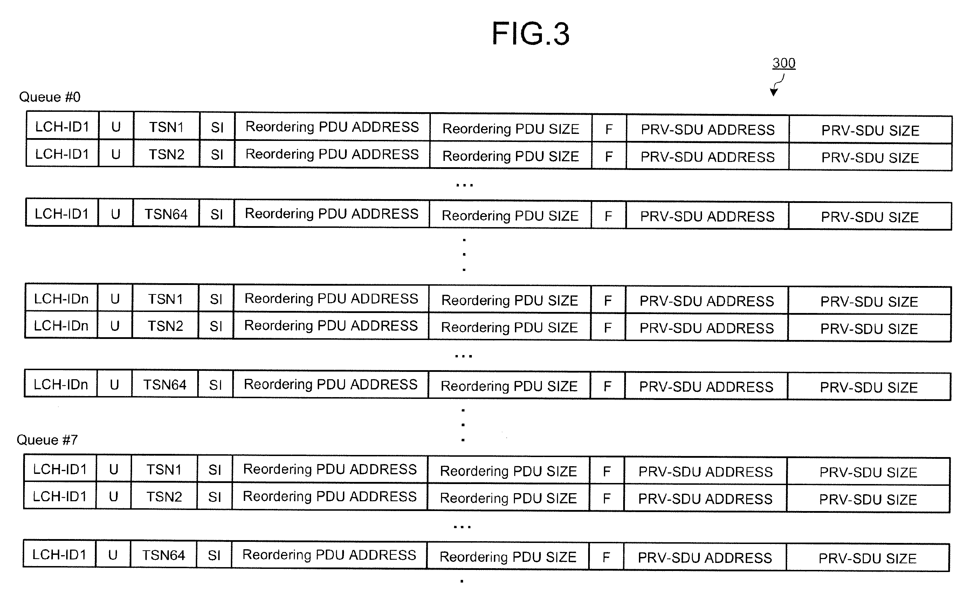

The PDU data managing unit 12 has a buffer 121 included therein that serves as a storage device. From the HARQ entity 11, the PDU data managing unit 12 receives an input of a MAC-ehs PDU, which is the data transmitted from the base station apparatus. Subsequently, the PDU data managing unit 12 temporarily stores the received MAC-ehs PDU into the buffer thereof. After that, the PDU data managing unit 12 reads MAC-ehs PDUs from the buffer, refers to the F fields in the MAC-ehs headers of the read MAC-ehs PDUs, and extracts the fields. Further, the PDU data managing unit 12 generates an expansion table 300 as depicted in FIG. 3. FIG. 3 is a drawing of an example of the expansion table.

Next, the expansion table 300 will be explained, with reference to FIG. 3. As depicted in FIG. 3, the expansion table 300 has lines corresponding to LCH-ID1 to LCH-IDn for each of the queues. Further, the expansion table 300 has lines corresponding to TSN1 to TSN64 for each of the LCH-IDs. Each of the lines has a U field, an SI field, a Reordering PDU address, a Reordering PDU size, an F field, a PRV-SDU address, and a PRV-SDU size.

Each of the U fields indicates the state of a corresponding Reordering PDU. More specifically, when a U field is set to "1", it means that the pre-deciphering processing unit 15 has not yet obtained the corresponding Reordering PDU. In contrast, if a U field is set to "0", it means either that the pre-deciphering processing unit 15 has already obtained the corresponding Reordering PDU or that there is no Reordering PDU to be stored. Each of the Reordering PDU addresses indicates an address in the SD-RAM 16 at which the Reordering PDU identified with the corresponding LCH-ID in the queue is to be stored. In the present embodiment, it is assumed that the addresses are configured so that Reordering PDUs having consecutive TSNs for each of the LCH-IDs are positioned adjacent to one another. For example, the Reordering PDU address for "LCH-ID1 and TSN2" may be a value calculated by adding the Reordering PDU size of "LCH-ID1 and TSN1" to the Reordering PDU address of "LCH-ID1 and TSN1". In this example, it is assumed that the TSN value of TSN1 for LCH-ID1 and the TSN value of TSN2 for LCH-ID1 are consecutive. For example, if the TSN values are each integer-format data, the difference between TSN1 for LCH-ID1 and TSN2 for LCH-ID1 is 1. Each of the Reordering PDU sizes indicates the size of a corresponding Reordering PDU. If a TSN is omitted, the corresponding Reordering PDU size is re-configured every time by adding thereto a size corresponding to the L field. Each of the F fields in the expansion table 300 depicted in FIG. 3 indicates whether a corresponding Reordering PDU contains two or more Reordering SDUs. For example, when an F field is set to "1", the corresponding Reordering PDU contains two or more Reordering SDUs, which means that, even if the first Reordering SDU is discarded, there are one or more Reordering SDUs that need to be stored. When a Reordering PDU contains two or more Reordering SDUs, the PRV-SDU address is set to such an address obtained by moving the Reordering PDU address by an amount corresponding to the Reordering PDU size. Each of the PRV-SDU sizes indicates a Reordering SDU size in units of L fields when a corresponding Reordering PDU contains two or more Reordering SDUs.

First, the PDU data managing unit 12 generates a table in which the lines are sequentially arranged according to the sequence of the TSNs for each of the queues. After that, at the head of the lines, the PDU data managing unit 12 writes the LCH-IDs obtained from the MAC-ehs header. Further, the PDU data managing unit 12 refers to the MAC-ehs header for the SI fields corresponding to the TSNs and writes the SI field values into the SI fields in the expansion table 300. Further, the PDU data managing unit 12 determines the addresses in the SD-RAM 16 at which the Reordering PDUs having the TSNs are to be stored and writes the determined addresses into the expansion table 300. Further, the PDU data managing unit 12 refers to the MAC-ehs header for the L fields corresponding to the TSNs, calculates the sizes of the Reordering PDUs, and writes the calculated sizes as the Reordering PDU sizes in the expansion table 300. Further, if the value in any of the SI fields corresponding to the TSNs is "10", "01", or "11", the PDU data managing unit 12 determines that "there are one or more Reordering SDUs that need to be stored". After that, the PDU data managing unit 12 sets a value (e.g., "1") indicating that "there are one or more Reordering SDUs that need to be stored" into the field in the expansion table 300 corresponding to the PDU (identified by an LCH-ID and a TSN). If the Reordering PDU contains two or more Reordering SDUs, the PDU data managing unit 12 writes such an address obtained by moving the Reordering PDU address by an amount corresponding to the size of the first Reordering SDU as the PRV-SDU address. Further, if the Reordering PDU contains two or more Reordering SDUs, the PDU data managing unit 12 refers to the L fields of the Reordering SDUs other than the first Reordering SDU and writes the values in the L fields as the PRV-SDU size. After that, the PDU data managing unit 12 obtains the SI information of consecutive Reordering PDUs from the expansion table 300 and judges whether an assembly is possible for each the consecutive Reordering PDUs, based on the value of the obtained SI information. The term "consecutive Reordering PDUs" denotes Reordering PDUs corresponding to consecutive TSNs, for mutually the same LCH-ID. For example, with respect to LCH-ID1, the Reordering PDU corresponding to TSN1 and the Reordering PDU corresponding to TSN2 are consecutive Reordering PDUs. In this situation, if "assembly is possible", it means that either Reordering SDUs contained in the consecutive Reordering PDUs are concatenated together or become complete MAC-ehs SDUs without being concatenated together. For example, when the value in an SI field is "00", because the Reordering PDU data represents a complete MAC-ehs SDU without being concatenated with another piece of PDU data, the PDU data managing unit 12 determines that an assembly is possible. In contrast, for example, if the values in SI fields are each "10", "01" or "11", and also, Reordering PDU addresses and PRV-SDU addresses are configured in the expansion table 300, because the Reordering SDUs contained in the consecutive Reordering PDUs serve as targets of a concatenation, the PDU data managing unit 12 determines that an assembly is possible. If an assembly is possible for a Reordering PDU, and also, it is possible to generate a complete MAC-ehs SDU, the Reordering PDU is determined to be decipherable (decipherable).

If an assembly is not possible for any of the Reordering PDUs, the PDU data managing unit 12 sets a flag indicating that a concatenation is not possible into the line in the expansion table 300 corresponding to the unassemblable Reordering PDU.

Further, when generating the expansion table 300, the PDU data managing unit 12 sets the values in the U fields to "1". When having been notified by the pre-deciphering processing unit 15 that a Reordering PDU is obtained, the PDU data managing unit 12 sets the value in the corresponding U field to "0".

Next, situations in which one or more of Reordering PDUs having consecutive TSNs have not been received, i.e., there are one or more unreceived Reordering PDUs among the Reordering PDUs having the consecutive TSNs, will be explained.

First, a situation will be explained in which there is no set of two or more consecutive TSNs that have not yet been received, i.e., there is only one unreceived TSN among the already-received TSNs. In that situation, the PDU data managing unit 12 generates a line for the unreceived TSN while leaving the columns other than the TSN column blank. Further, the PDU data managing unit 12 receives the subsequent TSN and fills in the columns in the corresponding line. After that, the PDU data managing unit 12 identifies the SI value of the Reordering PDU having the unreceived TSN, based on the SI value of the Reordering PDU having the TSN immediately preceding the unreceived TSN and the SI value of the Reordering PDU having the TSN immediately following the unreceived TSN. After that, the PDU data managing unit 12 judges whether it is possible to assemble the Reordering PDU having the unreceived TSN together with the immediately-preceding and immediately-following Reordering PDUs. If the assembly is not possible, the PDU data managing unit 12 sets a flag indicating that the assembly is not possible to the line corresponding to the Reordering PDU. The PDU data managing unit 12 generates the expansion table 300 in this manner.

Next, another situation will be explained in which there is a set of two or more consecutive TSNs that have not yet been received. In that situation, the PDU data managing unit 12 is not able to identify the SI values of the Reordering PDUs corresponding to the unreceived TSNs based on the SI values of the immediately-preceding and immediately-following Reordering PDUs. Thus, the PDU data managing unit 12 generates lines by writing therein only the TSNs of the unreceived Reroderng PDUs, while leaving the other columns other than the TSN column blank.

As a result of the PDU data managing unit 12 generating the expansion table 300 in this manner, it is possible to easily understand which Reordering PDUs are stored in what locations in the SD-RAM 16, as well as the TSN and the LCH-ID of each of the Reordering PDUs. Further, as a result of the PDU data managing unit 12 generating the expansion table 300, it is possible to easily check to see whether an assembly is possible between each of the Reordering PDUs and the immediately-preceding and immediately-following Reordering PDUs.

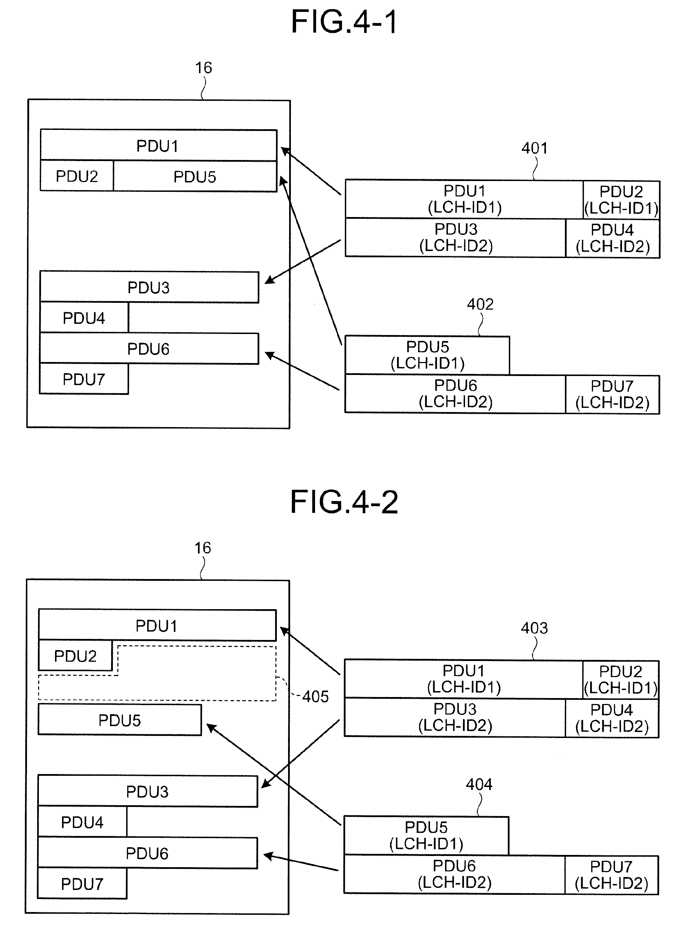

After that, the PDU data managing unit 12 stores the MAC-ehs headers contained in the received MAC-ehs PDUs. Further, the PDU data managing unit 12 stores the Reordering PDUs at the addresses in the SD-RAM 16 indicated as the Reordering PDU addresses in the expansion table 300. FIG. 4-1 is a drawing for explaining the storing of the Reordering PDUs into the SD-RAM during a Reordering time period. FIG. 4-2 is a drawing for explaining the storing of the Reordering PDUs into the SD-RAM during a non-Reordering time period. In this situation, the "Reordering time period" refers to a time period when there are one or more unreceived Reordering PDUs among the Reordering PDUs having consecutive TSNs, i.e., when there are one or more Reordering PDUs of which the re-transmission is waited for. On the contrary, the "non-Reordering time period" refers to a time period when Reordering PDUs having consecutive TSNs have been received, without skipping any TSN.

In FIG. 4-1, a MAC-ehs PDU 401 includes Reordering PDUs, namely, PDU 1, PDU 2, PDU 3, and PDU 4, whereas a MAC-ehs PDU 402 includes Reordering PDUs, namely, PDU 5, PDU 6, and PDU 7. Further, the PDUs 1, 2, and 5 are identified with LCH-ID1 and have consecutive TSNs. In contrast, the PDUs 3, 4, 6, and 7 are identified with LCH-ID2 and have consecutive TSNs. Because the Reordering PDUs have the consecutive TSNs in this manner, it is currently a non-Reordering time period. Further, as depicted in FIG. 4-1, the PDU data managing unit 12 stores the Reordering PDUs into the SD-RAM 16 in correspondence with each of the LCH-IDs, without putting any spaces therebetween.

In FIG. 4-2 also, a MAC-ehs PDU 403 includes Reordering PDUs, namely, PDU 1, PDU 2, PDU 3, and PDU 4, whereas a MAC-ehs PDU 404 includes Reordering PDUs, namely, PDU 5, PDU 6, and PDU 7. In this situation, however, although the PDUs 1 and 2 have consecutive TSNs, PDUs 5 and 2 do not have consecutive TSNs. It is thus currently a Reordering time period. Further, the PDU data managing unit 12 stores the PDU 1, the PDU 2P, and the DU5 into the SD-RAM 16, while skipping the location in the SD-RAM 16 indicated with a dotted line 405 in FIG. 4-2 where the unreceived Reordering PDU is to be stored. In contrast, because PDUs 3, 4, 6, and 7 have consecutive TSNs, these PDUs are stored into the SD-RAM 16 without putting any spaces therebetween.

The re-transmission controlling unit 13 has a timer T1 included therein which is a timer used for counting time.

The re-transmission controlling unit 13 obtains information about received Reordering PDUs from the PDU data managing unit 12. Further, the re-transmission controlling unit 13 determines that an expected TSN is the TSN that immediately follows the last one of the consecutive TSNs when the already-received Reordering PDUs are arranged according to the sequence of the TSNs thereof. After that, if the TSN of each of the Reorderign PDUs in a received MAC-ehs PDU is larger than the expected TSN, the re-transmission controlling unit 13 starts the timer T1. Further, the re-transmission controlling unit 13 waits for a group of Reordering PDUs in the next Transmission Time Interval (TTI) until the timer T1 reaches a predetermined time length. Further, if the Reordering PDU having the TSN requested to be re-transmitted arrives within the predetermined time length, the re-transmission controlling unit 13 resets the timer T1. Further, if the timer T1 has reached the predetermined time length or if the amount of accumulated Reordering PDUs has exceeded a predetermined value, the re-transmission controlling unit 13 notifies the conversion process table generating unit 14 that a condition has been satisfied.

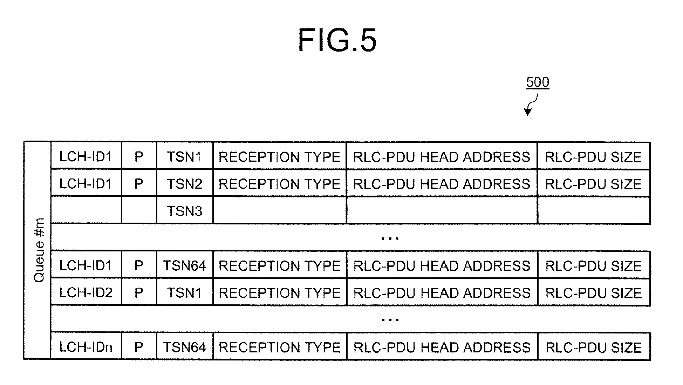

By using the expansion table 300 generated by the PDU data managing unit 12, the conversion process table generating unit 14 generates a conversion process table 500 depicted in FIG. 5. FIG. 5 is a drawing of an example of the conversion process table.

As depicted in FIG. 5, as for the conversion process table 500, one table is generated for each of the queues. Further, as depicted in FIG. 5, the conversion process table 500 is a conversion process table that is in a decipherable state and that is to be forwarded to the pre-deciphering processing unit 15 when the non-Reordering state has been achieved. In the conversion process table 500, the TSN numbers having mutually the same LCH-ID are sequentially arranged so that one TSN number is in each line. In other words, in the conversion process table 500, the entries are sequentially arranged according to the sequence of the TSNs so as to be consecutive for each of the LCH-IDs, from the top of the page of FIG. 5 downward. Further, when a RLC-PDU address and a PDU size have completely been specified in each of the lines of the conversion process table 500, a deciphering process will be performed. In the example in FIG. 5, the conversion process table 500 includes 64 data records of which the TSNs run from 1 to 64, each for LCH-ID1 and for LCH-ID2. The conversion process table 500 has columns for LCH-IDs, P fields, TSNs, reception types, RLC-PDU head addresses, and RLC-PDU sizes. In this situation, RLC-PDU denotes obtaining RLC-PDU data by removing padding (a dummy) from the inside of MAC-c and MAC-d SDUs. Each of the P fields represents a flag indicating whether the deciphering process is completed. The deciphering process is completed, if the P field is set to "0", whereas the deciphering process has not yet been completed, if the P field is set to "0". The P fields may be referred to in order to determine which one of the RLC-PDUs in the queue has completed the deciphering process and which one has not. The reception type is a value that is referred to in order to judge whether the corresponding Reordering PDU has to be deciphered or not. For example, if the reception type of a Reordering PDU is a DATA PDU such as Unacknowledged Mode Data (UMD) or Acknowledge Mode Data (AMD), the Reordering PDU is treated as a PDU that has to be deciphered. In contrast, if the reception type of a Reordering PDU is a Control PDU such as STATUS, RESET, or RESET ACK, the Reordering PDU is treated as a PDU that is not to be deciphered. Each of the RLC-PDU addresses is an RLC-PDU (MAC-c/d SDUs) address used for a DMA transfer corresponding to each of the logical channels. Each of the RLC-PDU sizes is the size of an RLC-PDU used for a DMA transfer corresponding to each of the logical channels.

The conversion process table generating unit 14 refers to the expansion table 300 generated by the PDU data managing unit 12. The conversion process table generating unit 14 prepares the conversion process table 500 in which the lines are arranged according to the sequence of the TSN values. After that, the conversion process table generating unit 14 obtains the LCH-IDs of the Reordering PDUs having the TSNs from the expansion table 300 and writes the obtained LCH-IDs into the conversion process table 500 as the LCH-IDs. Further, the conversion process table generating unit 14 obtains information about the Reordering PDUs that have already been transmitted from the pre-deciphering processing unit 15 to the deciphering processing unit 2 and writes "0" into such P fields in the conversion process table 500 that correspond to the "already-transmitted Reordering PDUs" indicated by the obtained information. In contrast, the conversion process table generating unit 14 writes "1" into such P fields that correspond to the Reordering PDUs for which information indicating the completion of a deciphering process has not yet been received from the pre-deciphering processing unit 15. Further, the conversion process table generating unit 14 determines the type of the data and sets a flag indicating whether a deciphering process has to be performed depending on the reception type. Further, the conversion process table generating unit 14 writes the information about the Reordering PDU addresses in the expansion table 300 as the RLC-PDU addresses. Further, the conversion process table generating unit 14 writes a value obtained by adding together a Reordering PDU size and a PRV-SDU size indicated in the expansion table 300 as a RLC-PDU size. The conversion process table generating unit 14 generates the conversion process table 500 in this manner. In this situation, because the PDU data managing unit 12 has already determined whether the assembly of the Reordering PDUs is possible or not, the conversion process table generating unit 14 simply fills in the table with the data without having to judge whether the assembly of the Reordering PDUs is possible. It has to be noted, however, that the conversion process table generating unit 14 writes the flags each indicating in the expansion table 300 whether the assembly is possible, into the conversion process table 500.

Regarding the conversion process table generating procedure performed by the conversion process table generating unit 14, another example from an aspect different from the above example will be explained below. In the following explanation, a Transmission Time Interval (TTI) denotes the size of a block used in the communication. In the following sections, Reordering PDUs contained in a specific queue in one TTI will be explained. First, a situation in which the TSNs in a specific queue in one TTI are consecutive, i.e., during a non-Reordering time period, will be explained.

The conversion process table generating unit 14 judges whether there is no skipped TSN by, for example, checking to see whether the TSNs of the Reordering PDUs are consecutive.

First, a situation in which the TSNs in a specific queue in one TTI are consecutive, i.e., during a non-Reordering time period, will be explained. The conversion process table generating unit 14 refers to the TSNs of the Reordering PDU segments so as to confirm that the TSNs are consecutive and that there is no skipped TSN. After that, the conversion process table generating unit 14 obtains the SI field values in the expansion table 300 corresponding to the TSNs. Further, the conversion process table generating unit 14 organizes the Reordering PDU segments arranged according to the sequence of the TSNs, while ensuring that the assembly process is properly performed according to the criteria stated below, by using the SI field values of the Reordering PDUs having the obtained TSNs. Next, the SI field values will be explained.

When the SI is set to "00", it means that the first Reordering SDU in the Reordering PDU is a complete MAC-ehs SDU and that the last Reordering SDU in the Reordering PDU is also a complete MAC-ehs SDU. When the SI is set to "01", it means that, if the Reordering PDU contains two or more Reordering SDUs, the last Reordering SDU is a complete MAC-ehs SDU. The first Reordering SDU in the Reordering PDU is the last segment of a MAC-ehs SDU. When the SI is set to "10", it means that, if the Reordering PDU contains two or more Reordering SDUs, the first Reordering SDU is a complete MAC-ehs SDU. The last Reordering SDU in the Reordering PDU is the first segment of a MAC-ehs SDU. When the SI is set to "11", it means that, if the Reordering PDU contains two or more Reordering SDUs, the first Reordering SDU is the last segment of a MAC-ehs SDU, whereas the last Reordering SDU is the first segment of a MAC-ehs SDU. If the Reordering PDU contains one Reordering SDU, the Reordering SDU is an intermediate segment of a MAC-ehs SDU. More specifically, following a Reordering PDU of which the SI is set to "00", another Reordering PDU of which the SI is set to either "01" or "11" is arranged. Following a Reordering PDU of which the SI is set to "01", another Reordering PDU of which the SI is set to either "00" or "10" is arranged. Following a Reordering PDU of which the SI is set to "10", another Reordering PDU of which the SI is set to either "01" or "11" is arranged. Following a Reordering PDU of which the SI is set to "11", another Reordering PDU of which the SI is set to either "01" or "11" is arranged. In other words, the conversion process table generating unit 14 generates the conversion process table 500 if the Reordering PDUs are arranged according to the sequence of the TSNs while meeting these criteria. After that, the conversion process table generating unit 14 transmits, to the pre-deciphering processing unit 15, a command indicating that the Reordering PDUs written in the conversion process table 500 have to be converted, together with the generated conversion process table 500.

Next, a situation in which the TSNs in a specific queue in one TTI are not consecutive, i.e., during a Reordering time period, will be explained.

First, the conversion process table generating unit 14 refers to the TSNs of the Reordering PDUs so as to confirm that the TSNs are not consecutive and there are one or more skipped TSNs. If a value obtained by subtracting the next expected TSN from a received TSN is 0 or 1, the conversion process table generating unit 14 generates the conversion process table 500 and transmits a command indicating that the Reordering PDUs have to be converted, to the pre-deciphering processing unit 15. The situation in which the value obtained by subtracting the next expected TSN from the received TSN is 0 or 1 is, in other words, the situation in which only one TSN is skipped.

Next, the process to generate the conversion process table 500 performed by the conversion process table generating unit 14, when the value obtained by subtracting the next expected TSN from a received TSN is 0 or 1, will be explained in detail.

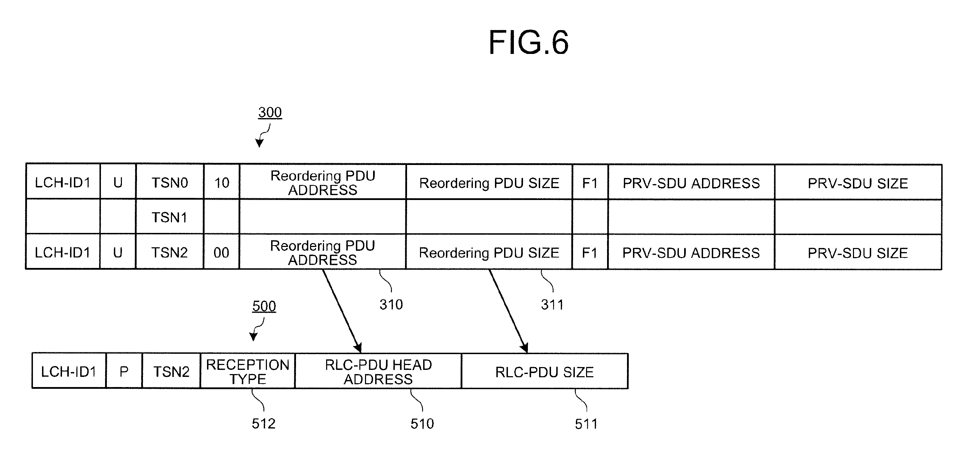

First, a process performed in a situation where, while TSN0 has already been received, whereas TSN1 has not yet been received, TSN2 is further received, while the SI of TSN1 is conjectured to be "00" will be explained, with reference to FIG. 6. FIG. 6 is a drawing for explaining an SDU table generating process performed when the SI of TSN1 is conjectured to be "00". The situation where the SI of TSN1 is conjectured to be "00" is, for example, a situation where the SI of TSN0 is "10", whereas the SI of TSN2 is "00", as depicted in FIG. 6. In the present example, it is assumed that TSN0 is already written in the conversion process table 500. In that situation, the conversion process table generating unit 14 refers to the expansion table 300 and obtains "00" as the SI of TSN1. After that, the conversion process table generating unit 14 determines that TSN0 and TSN1 are to be discarded, because the SI of TSN1 is "00". Further, the conversion process table generating unit 14 refers to the U fields of TSN0 and TSN1 in the expansion table 300 so as to confirm that the pre-deciphering processing unit 15 has not yet obtained the Reordering PDUs having TSN0 and TSN1 and initializes TSN0 and TSN1 in the expansion table 300. After that, the conversion process table generating unit 14 obtains a Reordering PDU address 310 from the line corresponding to TSN2 in the expansion table 300 and writes the obtained Reordering PDU address 310 as an RLC-PDU head address 510 in the line corresponding to TSN2 in the conversion process table 500. Further, the conversion process table generating unit 14 obtains a Reordering PDU size 311 from the line corresponding to TSN2 in the expansion table 300 and writes the obtained Reordering PDU size 311 as an RLC-PDU size 511 in the line corresponding to TSN2 in the conversion process table 500. After that, the conversion process table generating unit 14 obtains the reception type of the Reordering PDU having TSN2 and writes the obtained reception type into a reception type column 512 in the conversion process table 500. Further, the conversion process table generating unit 14 requests the pre-deciphering processing unit 15 that a conversion process is performed on the MAC-ehs SDUs corresponding to the Reordering PDU having TSN2.

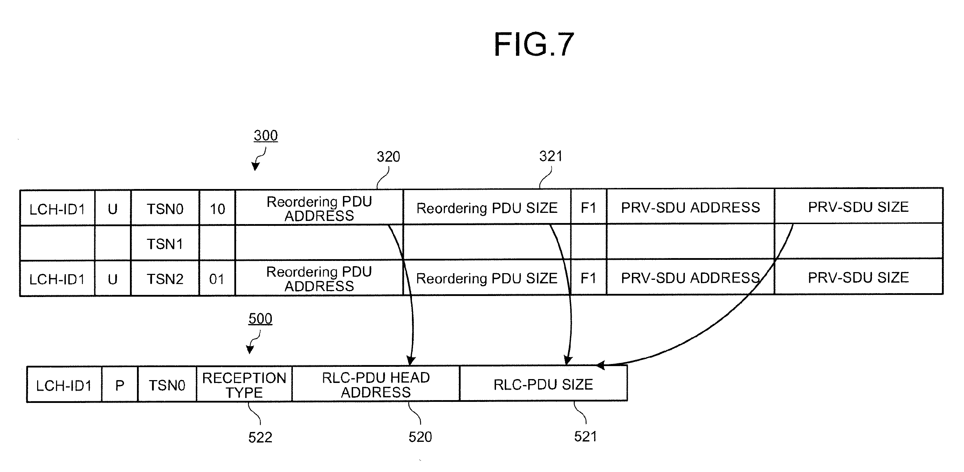

Next, a process performed in a situation where, while TSN0 of which the SI is "10" and TSN2 of which the SI is "00" have already been received, TSN1 of which the SI is "01" is further received, will be explained with reference to FIG. 7. FIG. 7 is a drawing for explaining the process performed in the situation where, while TSN0 of which the SI is "10" and TSN2 of which the SI is "00" have already been received, TSN1 of which the SI is "01" is further received. First, the conversion process table generating unit 14 receives TSN1 of which the SI is "01", while TSN0 of which the SI is "10" and TSN2 of which the SI is "00" have already been received. In this situation, the Reordering PDU having the SI "10" and the Reordering PDU having the SI "01" can be concatenated. Thus, the conversion process table generating unit 14 recognizes that the Reordering PDU having TSN1 and the Reordering PDU having TSN0 are to be concatenated together. Because it is possible to concatenate together TSN1 and TSN0 that have been received, the conversion process table generating unit 14 obtains a Reordering PDU address 320 corresponding to TSN0 in the expansion table 300 and writes the obtained Reordering PDU address 320 as an RLC-PDU head address 520 in the line corresponding to TSN0 in the conversion process table 500. Further, the conversion process table generating unit 14 obtains a Reordering PDU size 321 from the line corresponding to TSN0 in the expansion table 300 and writes the obtained Reordering PDU size 321 as an RLC-PDU size 521 in the line corresponding to TSN0 in the conversion process table 500. After that, the conversion process table generating unit 14 obtains the reception type of the Reordering PDU having TSN2 and writes the obtained reception type into a reception type column 522 in the conversion process table 500. The conversion process table generating unit 14 has thus generated the line corresponding to TSN0. Further, the conversion process table generating unit 14 requests the pre-deciphering processing unit 15 that a conversion process is performed on the MAC-ehs SDUs corresponding to the Reordering PDU having TSN0.

Next, a process performed by the conversion process table generating unit 14 in a situation where, while TSN0 has already been received, TSN2 of which the SI is "01" is further received. In that situation, the conversion process table generating unit 14 discards the first-received Reordering SDU and the stored MAC-ehs SDUs. After that, the conversion process table generating unit 14 generates a line corresponding to TSN2. After that, the conversion process table generating unit 14 requests the pre-deciphering processing unit 15 that a conversion process is performed on the MAC-ehs SDUs corresponding to the Reordering PDU having TSN2.

From the conversion process table generating unit 14, the pre-deciphering processing unit 15 receives a command indicating that a Reordering PDU written in the conversion process table 500 has to be converted. After that, the pre-deciphering processing unit 15 refers to the conversion process table 500 stored in the conversion process table generating unit 14. Further, by using the addresses corresponding to the Reordering PDU that are written in the conversion process table 500, the pre-deciphering processing unit 15 reads the Reordering PDU specified to be converted, out of the SD-RAM 16. After that, the pre-deciphering processing unit 15 converts the read Reordering PDU into a MAC-c or MAC-d PDU. In that situation, the pre-deciphering processing unit 15 removes the padding (the dummy) in the MAC-c or MAC-d PDU and obtains an RLC-PDU. The pre-deciphering processing unit 15 outputs the RLC-PDU to the deciphering processing unit 2.

Next, a process performed by the pre-deciphering processing unit 15 to convert a Reorderign PDU into a MAC-c or MAC-d PDU will be explained more specifically. In the following explanation, let us assume that the pre-deciphering processing unit 15 has MAC-ehs SDUs stored in the buffer thereof. The pre-deciphering processing unit 15 refers to the SI field of the obtained Reordering PDU.

In this situation, if the SI of the obtained Reordering PDU is "00", the pre-deciphering processing unit 15 outputs an RLC-PDU to the deciphering processing unit 2, the RLC-PDU being obtained by removing the padding (the dummy) in all of the MAC-c PDUs or the MAC-d PDUs corresponding to the MAC-ehs SDUs in the Reordering PDU.

Next, a situation in which the SI of the Reordering PDU segment obtained by the pre-deciphering processing unit 15 is "01" will be explained. If the obtained Reordering PDU and a stored MAC-ehs SDU segment is consecutive, the pre-deciphering processing unit 15 concatenates the first Reordering SDU in the obtained Reordering PDU with the stored MAC-ehs SDU segment. Further, the pre-deciphering processing unit 15 outputs an RLC-PDU to the deciphering processing unit 2, the RLC-PDU being obtained by removing the padding (the dummy) in a MAC-c or MAC-d PDU corresponding to the MAC-ehs SDU resulting from the concatenation. On the contrary, if the obtained Reordering PDU and none of the stored MAC-ehs SDU segments are consecutive, the pre-deciphering processing unit 15 discards the first-received Reordering SDU and the stored MAC-ehs SDUs. Further, the pre-deciphering processing unit 15 outputs a MAC-c or MAC-d PDU corresponding to the next MAC-ehs SDU in the same queue, to the deciphering processing unit 2.

Next, a situation in which the SI of the obtained Reordering PDU is "10" will be explained. The pre-deciphering processing unit 15 outputs an RLC-PDU to the deciphering processing unit 2, the RLC-PDU being obtained by removing the padding (the dummy) in all the MAC-c or MAC-d PDUs corresponding to the Reordering SDUs other than the last Reordering SDU in the obtained Reordering PDU. Further, the pre-deciphering processing unit 15 discards all the previously-stored MAC-ehs SDUs and stores the last Reordering SDU in the obtained Reordering PDU.

Next, a situation in which the SI of the obtained Reordering PDU is "11" will be explained. If the obtained Reordering PDU and a stored MAC-ehs SDU segment are consecutive, and also, the quantity of Reordering SDUs contained in the obtained Reordering PDU is only one, the pre-deciphering processing unit 15 concatenates the obtained Reordering SDU with the stored MAC-ehs SDU segment. After that, the pre-deciphering processing unit 15 stores the MAC-ehs SDU segment resulting from the concatenation.

In contrast, if the obtained Reordering PDU and a stored MAC-ehs SDU segment are consecutive, and also, the quantity of Reordering SDUs contained in the obtained Reordering PDU is two or more, the pre-deciphering processing unit 15 concatenates the first-received Reordering SDU with the stored MAC-ehs SDU segment. After that, the pre-deciphering processing unit 15 obtains a MAC-c or MAC-d corresponding to the MAC-ehs SDU resulting from the concatenation. Further, the pre-deciphering processing unit 15 obtains all the MAC-c or MAC-d PDUs corresponding to the Reordering SDUs other than the last Reordering SDU in the Reordering PDU. After that, the pre-deciphering processing unit 15 outputs an RLC-PDU to the deciphering processing unit 2, the RLC-PDU being obtained by removing the padding (the dummy) in the obtained MAC-c or MAC-d PDUs. Further, the pre-deciphering processing unit 15 discards all the previously-stored MAC-ehs SDU segments and stores the last Reordering SDU in the obtained Reordering PDU.

On the contrary, if the obtained Reordering PDU and none of the stored MAC-ehs SDU segments are consecutive, the pre-deciphering processing unit 15 discards the first-received Reordering SDU and stores the MAC-ehs SDUs. Further, if the quantity of Reordering SDUs contained in the Reordering PDU is two or more, the pre-deciphering processing unit 15 obtains all the MAC-c or MAC-d PDUs corresponding to the Reordering SDUs other than the first and the last Reordering SDUs in the Reordering PDU. After that, the pre-deciphering processing unit 15 outputs an RLC-PDU to the deciphering processing unit 2, the RLC-PDU being obtained by removing the padding (the dummy) in the obtained MAC-c or MAC-d PDUs corresponding to MAC-ehs SDUs. Further, the pre-deciphering processing unit 15 stores the last Reordering SDU in the obtained Reordering PDU.

Further, the pre-deciphering processing unit 15 sets deciphering-related parameters with the LCHs through which an obtained MAC-c or MAC-d PDU serving as a target of the deciphering process (hereinafter, "a deciphering target") is to be transmitted and informs the deciphering processing unit 2 of the set parameters. For example, the pre-deciphering processing unit 15 sets each of the LCHs to be in an AM mode or a UM mode, depending on whether the deciphering target is an UMD PDU or an AMD PDU. Further, the pre-deciphering processing unit 15 sets a user ID, a transfer origin address and a transfer destination address of the RLC-PDU, and a PDU size.

The deciphering processing unit 2 receives an input of an RLC-PDU (MAC-c and MAC-d SDUs) from the pre-deciphering processing unit 15. After that, the deciphering processing unit 2 encrypts the received RLC-PDU (the MAC-c and MAC-d SDUs) by using the parameters set with the LCHs.

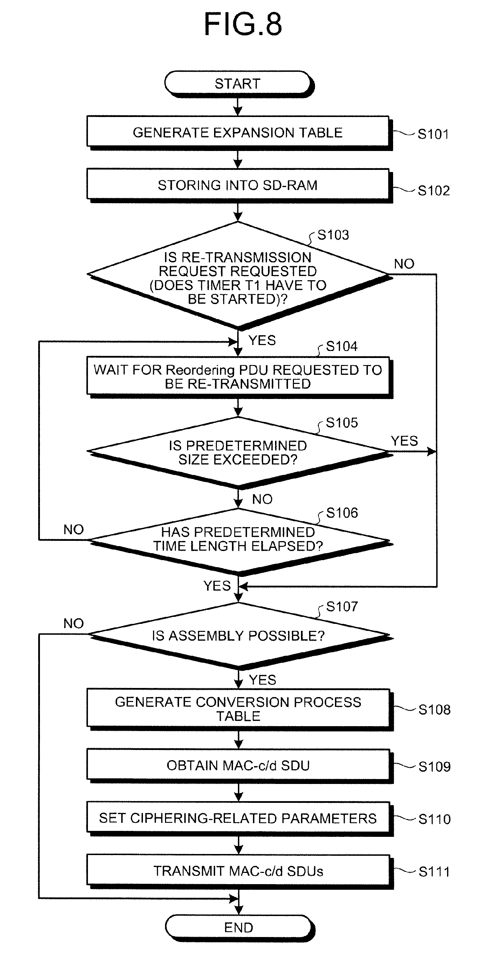

Next, a flow in a deciphering process performed by the wireless communication apparatus according to the present embodiment will be explained, with reference to FIG. 8. FIG. 8 is a flowchart of the deciphering process performed by the wireless communication apparatus according to the present embodiment. In the following sections, a process performed with respect to one TSN in a TTI in a specific queue will be explained.

The PDU data managing unit 12 obtains a MAC-ehs header and Reordering PDUs from a received MAC-ehs PDU. After that, the PDU data managing unit 12 generates the format of the expansion table 300 in such a manner that the entries are arranged according to the sequence of the TSNs for each of the LCH-IDs contained in the MAC-ehs header. After that, the PDU data managing unit 12 writes the SI values therein, checks the SIs of consecutive Rerordering PDUs, and sets flags each indicating a result of judging whether an assembly is possible. Further, the PDU data managing unit 12 generates the expansion table 300 by writing Reordering PDU addresses, Reordering PDU sizes, U field values, F field values, and SI information (step S101).

Further, the PDU data managing unit 12 stores the Reordering PDUs at the specified addresses in the SD-RAM 16 (step S102).

The re-transmission controlling unit 13 determines that an expected TSN is the TSN that immediately follows the last one of the consecutive TSNs. After that, the re-transmission controlling unit 13 obtains the TSN of the received Reordering PDU from the PDU data managing unit 12. Further, the re-transmission controlling unit 13 compares the TSN of the obtained Reordering PDU with the expected TSN and judges whether a re-transmission request is requested, i.e., whether the timer T1 needs to be started (step S103).

If a re-transmission request is requested (step S103: Yes), the re-transmission controlling unit 13 requests that the Reordering PDU having the expected TSN has to be re-transmitted and waits until the Reordering PDU requested to be re-transmitted is received (step S104).

After that, the re-transmission controlling unit 13 judges whether the amount of accumulated Reordering PDUs has exceeded a predetermined size that is stored in advance (step S105). If the predetermined size has not been exceeded (step S105: No), the re-transmission controlling unit 13 judges whether a predetermined time length stored in advance has elapsed (step S106). If the predetermined time length has not elapsed (step S106: No), the process returns to step S104.

On the contrary, if a re-transmission request is not requested (step S103: No), the conversion process table generating unit 14 checks the flag that is set in the conversion process table 500 and that indicates whether an assembly is possible. Thus, the conversion process table generating unit 14 judges whether an assembly is possible (step S107). Similarly, if the predetermined size has been exceeded (step S105: Yes), or if the predetermined time length has elapsed (step S106: Yes), the conversion process table generating unit 14 checks the flag that is set in the conversion process table 500 and that indicates whether an assembly is possible. Thus, the conversion process table generating unit 14 judges whether an assembly is possible (step S107). If an assembly is possible (step S107: Yes), the conversion process table generating unit 14 generates the conversion process table 500 by using the expansion table 300 (step S108). In this situation, in correspondence with the flags in the expansion table 300 each indicating whether an assembly is possible, the conversion process table generating unit 14 sets flags in the lines of the conversion process table 500 each indicating whether deciphering is possible.

The pre-deciphering processing unit 15 reads the Reordering PDUs from the addresses in the SD-RAM 16 that are specified in the conversion process table 500 and assembles together Reordeing SDUs contained in the Reordering PDUs so as to generate a MAC-ehs SDU. After that, the pre-deciphering processing unit 15 obtains a MAC-c or MAC-D SDU corresponding to the MAC-ehs SDU (step S109).

Further, the pre-deciphering processing unit 15 sets deciphering-related parameters with the LCHs through which MAC-c or MAC-d SDUs serving as deciphering targets are to be transmitted (step S110).

After that, the pre-deciphering processing unit 15 transmits an RLC-PDU (the MAC-c or MAC-d SDUs) to the deciphering processing unit 2, the RLC-PDU being obtained by removing the padding (the dummy) in the MAC-c or MAC-d SDUs (step S111).

On the contrary, if it has been determined that a deciphering is not possible (step S107: No), the conversion process table generating unit 14 ends the deciphering process.

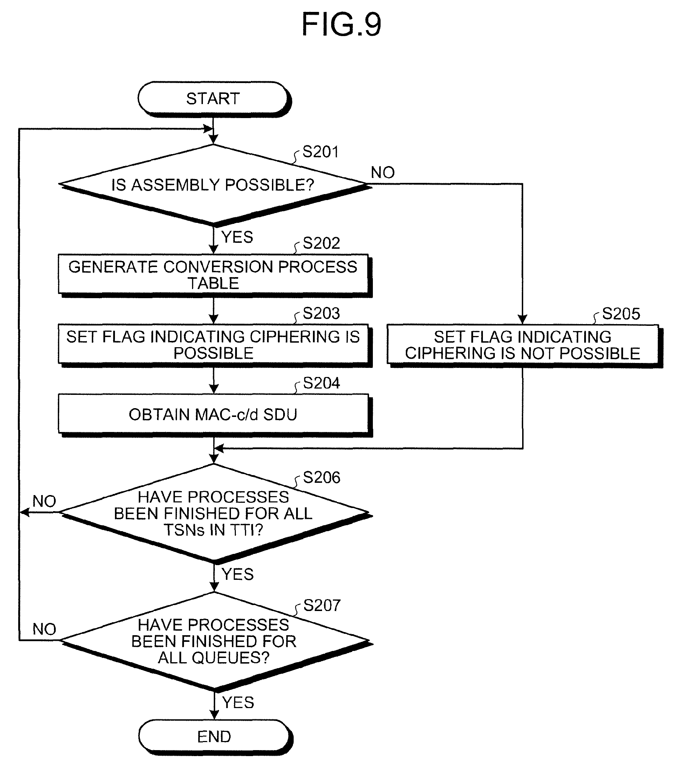

Next, a flow in the conversion process table generating procedure and the conversion process will be explained in detail, with reference to FIG. 9. FIG. 9 is a flowchart of the conversion process table generating procedure and the conversion process. FIG. 9 illustrates a procedure for performing the process at steps S107 through S109 in FIG. 8, with respect to each of all the TSNs in a TTI in each of all the queues.

The conversion process table generating unit 14 judges whether an assembly is possible for each of the Reordering PDUs having desired TSNs in a TTI in a specific queue (step S201).

If an assembly is possible (step S201: Yes), the conversion process table generating unit 14 generates the conversion process table 500 by adding thereto lines corresponding to the Reordering PDU having the judged TSNs (step S202).

After that, the conversion process table generating unit 14 sets flags in the conversion process table 500 each indicating that deciphering is possible for the Reordering PDUs having the judged TSNs (step S203).

Further, the pre-deciphering processing unit 15 refers to the conversion process table 500 and reads the Reordering PDUs indicated as decipherable from the addresses specified in the conversion process table 500 so as to obtain the Reordering SDUs. After that, the pre-deciphering processing unit 15 assembles the obtained Reordering SDUs together so as to generate a MAC-ehs SDU. After that, the pre-deciphering processing unit 15 obtains a MAC-c or MAC-d SDU corresponding to the generated MAC-ehs SDU (step S204).

On the contrary, if an assembly is not possible (step S201: No), the conversion process table generating unit 14 sets flags in the conversion process table 500 each indicating that deciphering is not possible for the Reordering PDUs having the judged TSNs (step S205).

The conversion process table generating unit 14 and the pre-deciphering processing unit 15 judge whether the decipherability judging process and the conversion process have been finished for each of all the TSNs in the TTI in the specific queue currently serving as the processing target (step S206). If the judgment result is in the negative (step S206: No), the process returns to step S201 where a decipherability judging process and a conversion process are performed on the next TSN in the TTI in the specific queue currently serving as the processing target.

On the contrary, if the judgment result is in the affirmative (step S206: Yes), the conversion process table generating unit 14 and the pre-deciphering processing unit 15 judge whether the decipherability judging process and the conversion process have been finished for each of all the queues (step S207). If the judgment result is in the negative (step S207: No), the process returns to step S201, where a decipherability judging process and a conversion process are performed on the TSNs in the TTI in another queue.

If the decipherability judging process and the conversion process have been finished for each of all the queues (step S207: Yes), the conversion process table generating unit 14 and the pre-deciphering processing unit 15 end the process.

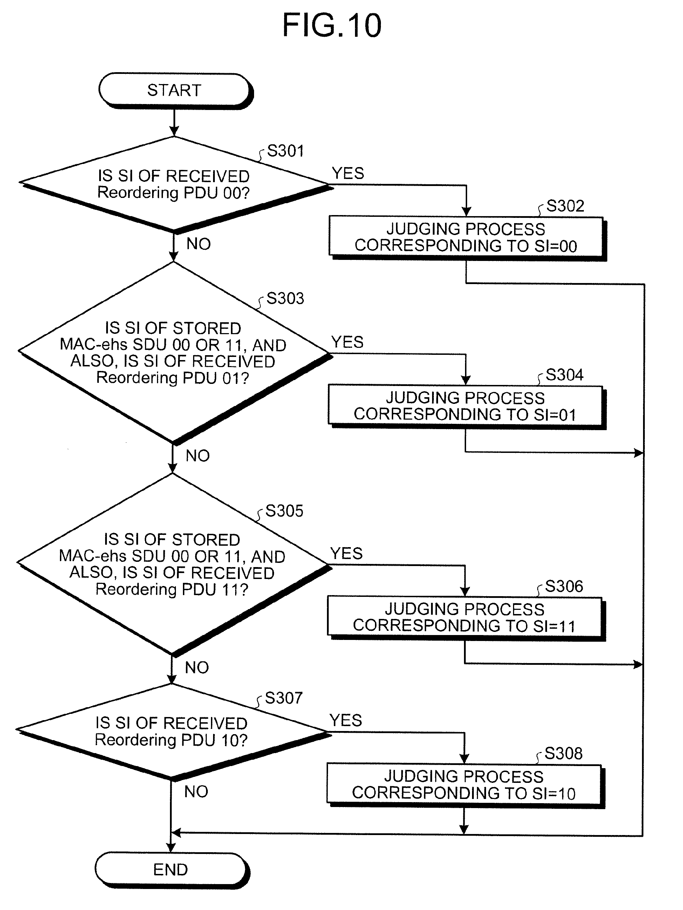

Next, details of the conversion process into a MAC-c or MAC-d SDU, based on the judgment of whether an assembly is possible for each Reordering SDU will be explained, with reference to FIG. 10. FIG. 10 is a flowchart of the conversion process into a MAC-c or MAC-d SDU, based on the judgment whether an assembly is possible for each Reordering SDU. In the following explanation, for the sake of convenience in the explanation, the pre-deciphering processing unit 15 is described as if being configured to directly receive the assemblability judgment results from the PDU data managing unit 12 and to perform the conversion process. In actuality, however, the assemblability judgment results from the PDU data managing unit 12 are written into the expansion table 300, so that the conversion process table generating unit 14 judges whether deciphering is possible according to the expansion table 300 and so that the pre-deciphering processing unit 15 concatenates Reordering SDUs together and performs the conversion into a MAC-c or MAC-d.

The PDU data managing unit 12 judges whether the SI of a received Reordering PDU is "00" or not (step S301). If the SI of the received Reordering PDU is "00" (step S301: Yes), the PDU data managing unit 12 determines that an assembly is possible for the received Reordering PDU. Accordingly, the pre-deciphering processing unit 15 performs the process corresponding to the situation where the SI of the obtained Reordering PDU is "00" (step S302).

On the contrary, if the SI of the received Reordering PDU is not "00" (step S301: No), the PDU data managing unit 12 judges whether the SI of the received Reordering PDU is "01", and also, the SI of a stored MAC-ehs SDU is either "00" or "11" (step S303). If the SI of the received Reordering PDU is "01", and also, the SI of a stored MAC-ehs SDU is either "00" or "11" (step S303: Yes), the PDU data managing unit 12 determines that an assembly is possible for the received Reordering PDU. Accordingly, the pre-deciphering processing unit 15 performs the process corresponding to the situation where the SI of the obtained Reordering PDU is "01" (step S304).

Next, the processes to be performed when one or both of the conditions are not satisfied (step S303: No) will be explained, the conditions namely being that the SI of the received Reordering PDU is "01"; and that the SI of a stored MAC-ehs SDU is either "00" or "11". In that situation, the PDU data managing unit 12 judges whether the SI of the received Reordering PDU is "11", and also, the SI of a stored MAC-ehs SDU is either "00" or "11" (step S305). If the SI of the received Reordering PDU is "11", and also, the SI of a stored MAC-ehs SDU is either "00" or "11" (step S305: Yes), the PDU data managing unit 12 determines that an assembly is possible for the received Reordering PDU. Accordingly, the pre-deciphering processing unit 15 performs the process corresponding to the situation where the SI of the obtained Reordering PDU is "11" (step S306).

Next, the processes to be performed when one or both of the conditions are not satisfied (step S305: No) will be explained, the conditions namely being that the SI of the received Reordering PDU is "11"; and that the SI of a stored MAC-ehs SDU is either "00" or "11". In that situation, the PDU data managing unit 12 judges whether the SI of the received Reordering PDU is "10" (step S307). If the SI of the received Reordering PDU is "10" (step S307: Yes), the PDU data managing unit 12 determines that an assembly is possible for the received Reordering PDU. Accordingly, the pre-deciphering processing unit 15 performs the process corresponding to the situation where the SI of the obtained Reordering PDU is "10" (step S308).

On the contrary, if the SI of the received Reordering PDU is not "10" (step S307: No), the PDU data managing unit 12 determines that an assembly is not possible for the received Reordering PDU. In that situation, the pre-deciphering processing unit 15 does not perform the conversion process.

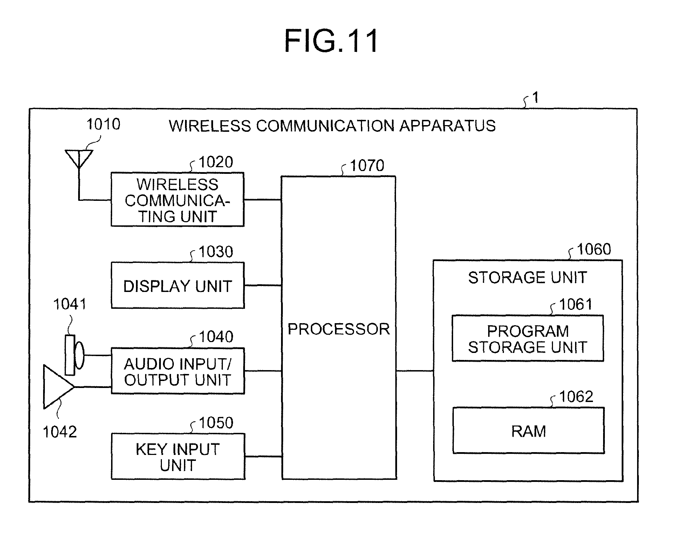

Next, an exemplary hardware configuration of a wireless communication apparatus 1 according to an embodiment will be explained, with reference to FIG. 11. FIG. 11 is a drawing of the exemplary hardware configuration of the wireless communication apparatus according to the embodiment. As depicted in FIG. 11, the wireless communication apparatus 1 includes an antenna 1010, a wireless communicating unit 1020, a display unit 1030, an audio input/output unit 1040, a microphone 1041, a speaker 1042, an input unit 1050, a storage unit 1060, and a processor 1070.

The wireless communicating unit 1020, the display unit 1030, the audio input/output unit 1040, the input unit 1050, and the storage unit 1060 are connected to the processor 1070. The antenna 1010 is connected to the wireless communicating unit 1020. The microphone 1041 and the speaker 1042 are connected to the audio input/output unit 1040.

The wireless communicating unit 1020 controls transmissions and receptions of signals in a wireless communication with, for example, a base station apparatus. The display unit 1030 is a display screen, for example. The input unit 1050 corresponds to operation keys, for example.

The storage unit 1060 and the processor 1070 realize the functions of the MAC-ehs entity depicted in FIG. 1. More specifically, a program storage unit 1061 in the storage unit 1060 stores therein various types of computer programs (hereinafter "programs"), such as a common information presenting program that realizes the processes performed by the MAC-ehs entity depicted in FIG. 1 or the like. Processes realizing the functions described above are generated, when the processor 1070 reads and executes these programs. Further, a Random Access Memory (RAM) 1062 corresponds to the SD-RAM 16 depicted in FIG. 1, for example.

As explained above, the wireless communication apparatus according to the present embodiment checks the information about the Reordering PDUs by using the expansion table. Thus, according to the present embodiment, it is possible to reduce the calling and the writing of the data from and to the physical memory, which are requested by the conventional technique every time one of certain processes is performed, such as establishing routes of the Rerodering PDUs, exercising the re-transmission control, and checking to see if an assembly is possible. As a result, it is possible to reduce the number of times DMA is made. It is therefore possible to improve the throughput of the processes performed on the MAC-ehs PDUs.

Further, the wireless communication apparatus according to the present embodiment is able to, during a Reordering time period, expand the Rerodering PDUs and to write, in advance, the information about the LCH-IDs, the TSN, and the storing destination addresses thereof into the expansion table. In this regard, according to the conventional technique, it is requested to read the Reorderin PDUs after the Reordering time period has ended and to check the information about each of the read Reordering PDUs. In contrast, according to the present embodiment, because the information about the Reordering PDUs is already written in the expansion table, the information checking process is already finished. It is therefore possible to reduce the time requested by the checking of the information. Further, the wireless communication apparatus according to the present embodiment is able to judge, in advance, whether it is possible to assemble together the consecutive Reordering PDUs, before the Reordering time period ends. Furthermore, when the quantity of skipped TSNs is one, the wireless communication apparatus according to the present embodiment is able to specify the SI value of the unreceived TSN and is also able to judge, in advance before the Reordering time period ends, whether an assembly is possible for the Reordering PDU having the unreceived TSN. According to the conventional technique, it is requested to judge whether an assembly is possible for each of all the Reordering PDUs, after the Reordering time period has ended. In contrast, the wireless communication apparatus according to the present embodiment needs to check only the parts where two or more TSNs are skipped, after the Reordering time period has ended. It is therefore possible to shorten the time period reqested before starting the pre-deciphering process. As explained above, the wireless communication apparatus according to the present embodiment is able to shorten the time period between the end of the Reordering time period and the start of the deciphering process. It is therefore possible to improve the throughput of the processes performed on the MAC-ehs PDUs.

In the present embodiment, in order to accurately assemble the Reordering SDUs and to accurately obtain the MAC-c or MAC-d SDUs corresponding to the completed MAC-ehs SDUs, the conversion process table is at first generated from the expansion table, before assembling the Reordering SDUs and obtaining the MAC-C or MAC-d SDUs corresponding to the completed MAC-ehs SDUs. However, the expansion table does not have to be generated. It is acceptable to obtain the MAC-c or MAC-d SDUs corresponding to the MAC-ehs SDUs by referring to the expansion table. In that situation, the conversion process table generating unit 14 does not have to be provided.

### [Explanation of Reference]

- 1: MAC-ehs entity
- 2: deciphering processing unit
- 11: HARQ entity
- 12: PDU data managing unit
- 13: re-transmission controlling unit
- 14: conversion process table generating unit
- 15: pre-deciphering processing unit
- 16: SD-RAM
- 121: buffer

## Claims

1. A wireless communication apparatus comprising:
a data input unit that receives MAC-ehs PDU data including therein PDU segments and a header including logical channel identifiers that indicate logical channels through which the PDU segments are to be transmitted, sequence numbers of the PDU segments, and SI information that indicates connection relationships among SDU segments contained in the PDU segments;
a PDU data managing unit that determines addresses in a storage unit at which the MAC-ehs PDU data is to be stored, based on the header of the received MAC-ehs PDU data, that generates an expansion table containing the logical channel identifiers, the sequence numbers, and the SI information of the PDU segments as well as the determined addresses in the storage unit, and that stores the MAC-ehs PDU data at the determined addresses in the storage unit;
a re-transmission controlling unit that determines that an expected PDU segment is a PDU segment including a sequence number immediately following a last one of sequence numbers of consecutive PDU segments that have already been received by the PDU data managing unit, that judges whether a sequence number of a received PDU segment coincides with the sequence number of the expected PDU segment, that makes a re-transmission request for the expected PDU segment when the sequence numbers do not coincide, and that issues a notification indicating that a predetermined time length has elapsed since the re-transmission request is made or PDU segments accumulated in the storage unit have reached a predetermined size; and
a pre-deciphering processing unit that, when having received the notification issued by the re-transmission controlling unit, obtains the PDU segments from the storage unit based on the addresses written in the expansion table and that completes a MAC-ehs SDU from the obtained PDU segments based on the expansion table.

2. The wireless communication apparatus according to claim 1, wherein
the PDU data managing unit generates the expansion table and determines whether it is possible to assemble each of the PDU segments with another, based on the SI information of the PDU segments, and
the pre-deciphering processing unit completes the MAC-ehs SDU by assembling the SDU segments together while using the SI information, based on the assemblability determined by the PDU data managing unit.

3. The wireless communication apparatus according to claim 1 or 2, wherein
the PDU data managing unit includes a buffer that temporarily stores therein the received MAC-ehs PDU data and that reads and writes faster than the storage unit does, and
the PDU data managing unit reads the MAC-ehs PDU data stored in the buffer and, with respect to the read MAC-ehs PDU data, obtains the PDU segments, determines the addresses, generates the table, and stores the MAC-ehs PDU data into the storage unit.

4. The wireless communication apparatus according to claim 1 or 2, further comprising a deciphering processing unit that encrypts an RLC-PDU (MAC-d PDUs or MAC-c PDUs) generated by the pre-deciphering processing unit.

5. The wireless communication apparatus according to claim 1 or 2, wherein the pre-deciphering processing unit obtains a MAC-c SDU or a MAC-d SDU corresponding to the completed MAC-ehs SDU, causes the obtained MAC-c SDU or MAC-d SDU to be an RLC-PDU by removing padding from inside thereof, and sets a deciphering-related parameter.

6. The wireless communication apparatus according to claim 1 or 2, further comprising a conversion process table generating unit that, when having received the notification from the re-transmission controlling unit, generates a conversion process table based on the expansion table, the conversion process table containing a storing destination address and a reception type of the MAC-ehs SDU on which a deciphering process has been performed, wherein
the pre-deciphering processing unit performs a pre-deciphering process by using the conversion process table based on the expansion table.

7. A wireless communication apparatus controlling method comprising:
receiving a MAC-ehs PDU including therein PDU segments and a header including logical channel identifiers that indicate logical channels through which the PDU segments are to be transmitted, sequence numbers of the PDU segments, and SI information that indicates connection relationships among SDU segments contained in the PDU segments;
determining addresses in a storage unit at which the MAC-ehs PDU data is to be stored, based on the header of the received MAC-ehs PDU data;
generating an expansion table containing the logical channel identifiers, the sequence numbers, and the SI information of the PDU segments as well as the determined addresses in the storage unit;
storing the MAC-ehs PDU data at the determined addresses in the storage unit;
determining that an expected PDU segment is a PDU segment including a sequence number immediately following a last one of sequence numbers of consecutive PDU segments that have already been received by the PDU data managing unit;
judging whether a sequence number of a received PDU segment coincides with the sequence number of the expected PDU segment, making a re-transmission request for the expected PDU segment when the sequence numbers do not coincide, and issuing a notification indicating that a predetermined time length has elapsed since the re-transmission request is made or that PDU segments accumulated in the storage unit have reached a predetermined size; and
obtaining the PDU segments from the storage unit when the notification has been received and completing a MAC-ehs SDU from the obtained PDU segments based on the expansion table.
